# DEMANDE DE BREVET EUROPEEN

(11) **EP 1 965 183 A1**
(43) Date de publication de la demande: **03.09.2008**
(21) Numéro de dépôt: 08305034.4
(22) Date de dépôt: 27.02.2008
(51) Int. Cl.: G01J 3/02, G01J 3/18

(54) **Spectrographe à fenêtre de détecteur inclinée**

(30) Priorité: 28.02.2007 FR 0753563
(71) Demandeur: Horiba Jobin Yvon S.A.S., 91160 Longjumeau (FR)
(72) Inventeur: Thevenon, Alain, 91220, BRETIGNY-SUR-ORGE (FR); Millet, Viviane, 91310 LINAS (FR); Corde, Pierre-André, 94500 CHAMPIGNY-SUR-MARNE (FR)
(74) Mandataire: Michelet, Alain

(57) **Abrégé**

L'invention concerne un spectrographe à fenêtre de détecteur inclinée comprenant une source lumineuse (1), une fente d'entrée (3), un réseau (4), un détecteur (5) comportant une fenêtre à travers laquelle est transmis le faisceau lumineux diffracté par le réseau (4), une partie du faisceau lumineux diffracté générant des réflexions sur la fenêtre ou entre celle-ci et la surface sensible du détecteur (5) et au moins un moyen d'inclinaison apte à éviter des spectres parasites.

Selon l'invention, un des moyens d'inclinaison aptes à éviter des spectres parasites comprend la fenêtre de détecteur (6, 11) qui est une fenêtre de détecteur inclinée (11).

## Description

La présente invention concerne un spectrographe à fenêtre de détecteur inclinée.

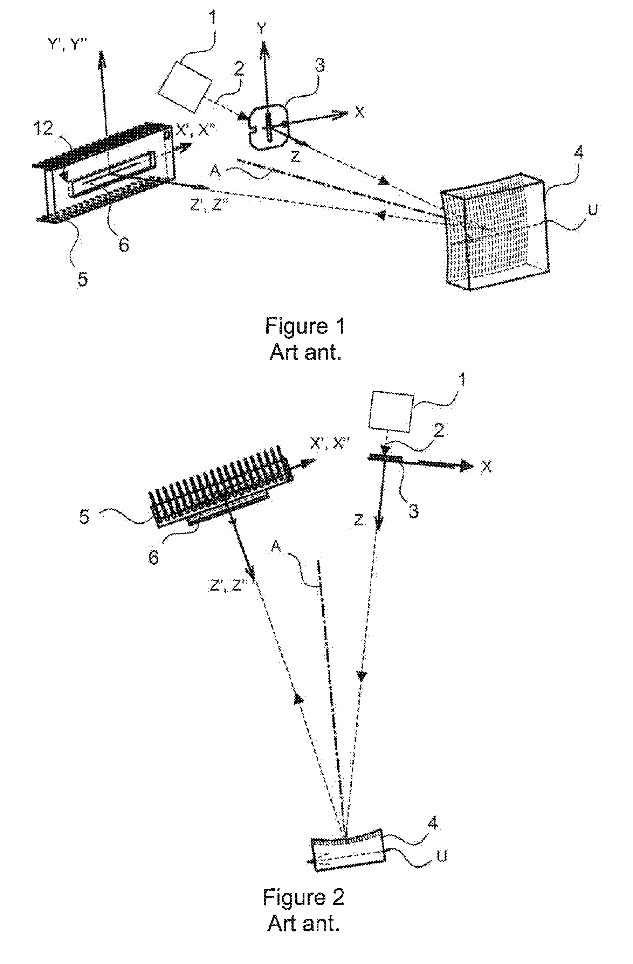

Les spectrographes de l'art antérieur comprennent une source lumineuse, une fente d'entrée, un réseau qui peut être un réseau holographique concave et un détecteur. Les figures 1 et 2 représentent un exemple de spectrographe à réseau selon l'art antérieur. La figure 1 est une représentation du spectrographe à trois dimensions et la figure 2 correspond à une vue de dessus.

Les réseaux holographiques concaves présentent une surface optique sur laquelle a été inscrit un grand nombre de traits (jusqu'à 6000 traits/mm) servant à diffracter tout faisceau de rayons incidents. Ils fonctionnent préférentiellement en réflexion.

Les réseaux holographiques concaves sont habituellement corrigés des aberrations.

Le détecteur peut être un détecteur de type PDA (Photodiode array) ou de type CCD (Charge Coupled Device). Le matériau utilisé pour le détecteur peut être en silicium ou InGaAs par exemple avec une surface qui est très réfléchissante.

II est possible d'utiliser un détecteur refroidi. Un tel détecteur refroidi comporte une fenêtre qui protège la surface sensible du détecteur. Cette fenêtre est indispensable afin d'éviter des phénomènes de condensation sur la surface du détecteur.

Les réflexions multiples produites dans la fenêtre et entre les faces de la fenêtre et la surface du détecteur dégradent considérablement le rapport signal sur bruit, superposant au spectre à mesurer des spectres parasites.

Afin de réduire l'influence de ces phénomènes sur la performance du spectrographe, il est connu d'utiliser un réseau calculé de telle sorte que le spectre qu'il produit soit incliné. Ainsi, les faisceaux parasites réfléchis sur la surface sensible du détecteur ne retournent pas vers le réseau. On évite ainsi des phénomènes de rediffraction à l'origine de problèmes de lumière parasite qui nuisent à la performance de l'instrument.

On connaît également la méthode qui consiste à incliner le détecteur autour d'un axe parallèle au spectre pour que les réflexions multiples entre le détecteur et les faces de la fenêtre aillent partiellement ou totalement à l'extérieur de la surface sensible du détecteur dans le sens perpendiculaire à la dispersion. En général, cette action altère la résolution spectrale de l'instrument.

Les deux méthodes précédentes, mettant chacune en oeuvre un moyen d'inclinaison, peuvent être utilisées séparément ou conjointement.

Il est aussi connu d'utiliser un filtre sélecteur d'ordre incliné devant le détecteur afin d'éviter une nouvelle contribution à des spectres parasites.

Ces méthodes améliorent le bruit de fond du spectrographe. En revanche, elles dégradent considérablement la résolution spectrale de l'appareil.

L'objectif de la présente invention est donc de proposer une solution pour éviter la contribution des spectres parasites au spectre à mesurer sans perdre en résolution spectrale.

A cet effet, l'invention concerne un spectrographe à fenêtre de détecteur inclinée comprenant :
- une source lumineuse apte à émettre un faisceau lumineux,
- une fente d'entrée apte à transmettre une partie du faisceau lumineux émis par la source lumineuse et à générer un faisceau lumineux transmis,
- un réseau apte à diffracter le faisceau lumineux transmis par la fente d'entrée et à générer un faisceau lumineux diffracté et un spectre dans un plan image (X', Y'),
- un détecteur apte à détecter le faisceau lumineux diffracté par le réseau, ledit détecteur comprenant une fenêtre à travers laquelle est transmis le faisceau lumineux diffracté par le réseau, une partie du faisceau lumineux diffracté générant des réflexions sur la fenêtre ou entre celle-ci et la surface sensible du détecteur contenue dans un plan de détection (X", Y"),
- au moins un moyen d'inclinaison apte à éviter des spectres parasites.

Selon l'invention, un des moyens d'inclinaison aptes à éviter des spectres parasites comprend la fenêtre de détecteur qui est une fenêtre de détecteur inclinée.

Dans différents modes de réalisation possibles, la présente invention concerne également les caractéristiques qui ressortiront au cours de la description qui va suivre et qui devront être considérées isolément ou selon toutes leurs combinaisons techniquement possibles :
- la fenêtre de détecteur inclinée est inclinée d'un angle (γ) par rapport au plan de détection (X", Y") du détecteur,
- l'angle (γ) est supérieur à 0° et inférieur à 45°,
- le spectrographe à fenêtre de détecteur inclinée comprend au moins un autre moyen d'inclinaison apte à éviter des spectres parasites,
- l'autre moyen d'inclinaison apte à éviter des spectres parasites comprend un filtre sélecteur incliné et disposé entre le réseau et le détecteur,
- l'autre moyen d'inclinaison apte à éviter des spectres parasites comprend le détecteur qui est un détecteur incliné d'un angle (α), ledit détecteur incliné d'un angle (α) étant incliné de façon à ce que le plan de détection (X", Y") dudit détecteur soit incliné d'un angle (α) par rapport au plan image (X', Y') du réseau, et ledit angle (α) étant défini dans le plan (Y", Z"), orthogonal au plan de détection (X", Y"),
- l'autre moyen d'inclinaison apte à éviter des spectres parasites comprend le réseau qui est un réseau calculé de telle sorte que le spectre qu'il produit soit incliné d'un angle (β) par rapport au plan de détection (X", Y") du détecteur.

L'invention sera décrite plus en détail en référence aux dessins annexés dans lesquels:
- les figures 1 et 2 sont des représentations à trois dimensions et une vue de dessus respectivement, d'un spectrographe à fenêtre de détecteur inclinée à réseau holographique concave selon l'art antérieur ;
- les figures 3 et 4 sont des représentations à trois dimensions et une vue de dessus respectivement, d'un spectrographe à fenêtre de détecteur inclinée, selon un mode de réalisation de l'invention ;

La figure 1 est une représentation à trois dimensions d'un spectrographe à réseau holographique concave selon l'art antérieur. La figure 2 représente la vue de dessus correspondante.

Un tel spectrographe comprend une source lumineuse 1 qui émet un faisceau lumineux se dirigeant vers une fente d'entrée 3 selon une direction 2, parallèle à un axe Z. La fente d'entrée 3 est définie selon le repère (X, Y, Z). La fente d'entrée 3 se trouve dans le plan (X, Y).

On entend par fente d'entrée 3, une ouverture dans un support ou tout autre moyen bloquant une partie du faisceau lumineux émis par la source lumineuse 1 et transmettant l'autre partie de ce faisceau.

La source lumineuse 1 illumine quasi uniformément la fente d'entrée 3 directement ou à l'aide d'une optique de couplage.

Il ressort de la fente d'entrée 3, un faisceau lumineux transmis.

Le faisceau lumineux transmis par la fente d'entrée 3 est incident sur un réseau 4 qui peut être un réseau holographique concave ou autre. On obtient un faisceau lumineux diffracté et un spectre dans un plan image (X', Y'). Le plan image est défini selon le repère (X', Y', Z') où l'axe Z' est orthogonal au plan image (X', Y').

La fente d'entrée 3 est rectangulaire et s'étend longitudinalement selon l'axe Y. Le réseau 4 est un réseau holographique concave. Les traits de ce réseau holographique concave 4 sont courbés et disposés les uns à la suite des autres selon un axe U. L'axe longitudinal Y est normal à l'axe d'alignement U et à l'axe Z. Le réseau holographique concave 4 présente un axe A normal à l'axe U et passant par le sommet de la surface courbée du réseau.

Un filtre sélecteur d'ordre peut éventuellement être inséré dans le faisceau après le réseau 4.

Le faisceau lumineux diffracté par le réseau 4 est détecté par un détecteur 5. Le détecteur 5 est disposé sur le trajet du faisceau lumineux diffracté par le réseau 4 afin d'intercepter le spectre contenu dans le plan image (X', Y').

Le détecteur 5 est défini selon un repère (X", Y", Z"). Le plan (X", Y'') représente le plan de détection qui est orthogonal à l'axe Z''.

Le détecteur 5 comprend une surface sensible qui se trouve dans le plan de détection (X", Y") du détecteur 5.

Afin de simplifier le schéma, seule la façade du détecteur 5 est représentée sur les figures 1 et 2, et celles qui vont suivre. Cette façade comprend une ouverture de détecteur 12 traversée par le faisceau lumineux diffracté avant qu'il n'arrive sur la surface sensible du détecteur 5.

Dans l'exemple des figures 1 et 2, la surface sensible du détecteur 5 se trouve dans le plan image (X', Y') du réseau 4. Par conséquent, le plan image (X', Y') est confondu avec le plan de détection (X", Y") du détecteur 5. Les axes Z' et Z" sont aussi confondus.

Le spectrographe à réseau holographique concave peut comprendre des moyens optiques tels des miroirs pour réfléchir et focaliser le faisceau lumineux transmis par la fente 3, le faisceau diffracté et éventuellement le faisceau dispersé.

Le détecteur 5 comprend souvent une fenêtre 6, 11 à travers laquelle est transmis le faisceau lumineux diffracté par le réseau 4.

Une partie du faisceau lumineux diffracté génère des réflexions multiples sur la fenêtre 6 ou entre celle-ci et la surface sensible du détecteur 5.

Pour éliminer ces réflexions, il est connu, comme dit plus haut, d'utiliser au moins un moyen d'inclinaison apte à éviter que des spectres parasites se superposent au spectre à mesurer.

En fait, les moyens d'inclinaison de l'art antérieur consistent à incliner soit le spectre à mesurer, c'est-à-dire le plan image (X', Y') du réseau 4, par rapport au plan de détection (X", Y") du détecteur 5, soit le plan de détection (X", Y") du détecteur 5.

Ils permettent d'améliorer le bruit de fond du spectrographe. En revanche, ils dégradent considérablement la résolution spectrale de l'appareil.

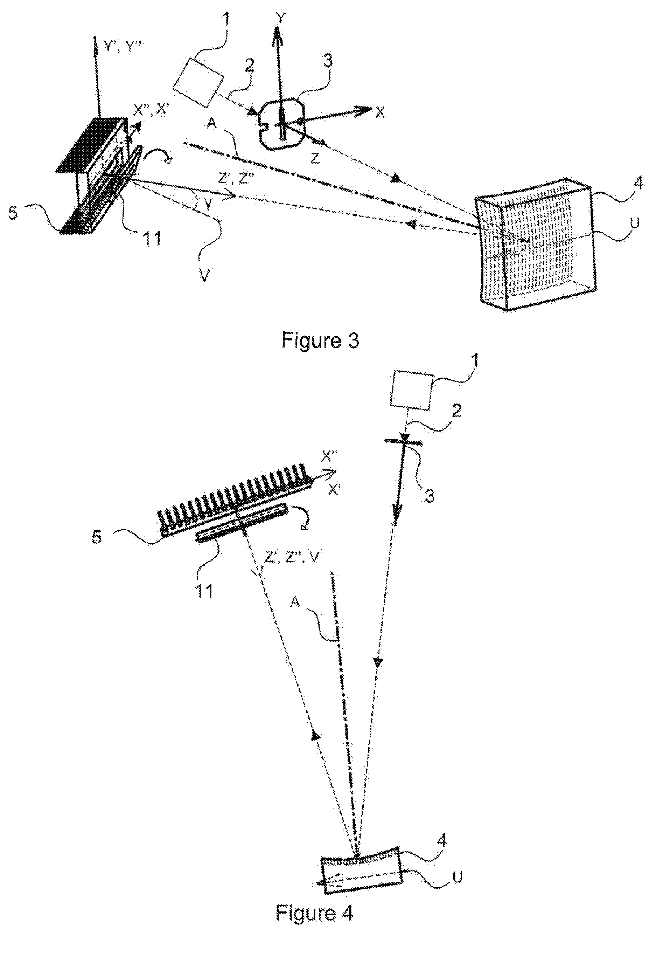

Selon un mode de réalisation de l'invention, représenté sur les figures 3 et 4, le moyen d'inclinaison apte à éviter les spectres parasites comprend la fenêtre de détecteur 6, 11 qui est une fenêtre inclinée 11.

Les figures 3 et 4 correspondent à une représentation à trois dimensions et à une vue de dessus, respectivement, d'un spectrographe à fenêtre de détecteur inclinée.

La fenêtre de détecteur inclinée 11 est inclinée d'un angle (γ) par rapport au plan de détection (X", Y") du détecteur 5.

Sur la figure 3, la fenêtre de détecteur 11 est inclinée vers le bas. Elle peut également être inclinée vers le haut.

La normale V à la surface de la fenêtre de détecteur inclinée 11 fait un angle (γ) avec l'axe Z" qui est perpendiculaire au plan de détection (X", Y"). La surface de la fenêtre de détecteur inclinée 11 fait donc un angle (γ) avec le plan de détection (X", Y").

L'angle (γ) est supérieur à 0° et inférieur à 45°.

L'inclinaison de la fente permet d'éviter que les faisceaux parasites se réfléchissent entre la surface sensible du détecteur 5 et la fente inclinée 11 qui renvoie les faisceaux en dehors de la surface sensible. Les réflexions entre les faces de la fente inclinée 11 sont également déviées.

Cette méthode permet ainsi d'éviter les spectres parasites sans incliner le plan image (X', Y') du réseau 4, ni le plan de détection (X", Y") du détecteur 5, ce qui revient à éviter presque complètement les pertes en résolution spectrale.

Selon un autre mode de réalisation de l'invention, le spectrographe à fenêtre de détecteur inclinée peut comprendre au moins un autre moyen d'inclinaison apte à éviter des spectres parasites.

Cet autre moyen d'inclinaison peut être un filtre sélecteur incliné et disposé entre le réseau 4 et le détecteur 5.

L'autre moyen d'inclinaison apte à éviter des spectres parasites peut comprendre le détecteur 5 qui est un détecteur incliné d'un angle (α). Le détecteur incliné d'un angle (α) est incliné de façon à ce que le plan de détection (X", Y") du détecteur soit incliné d'un angle (α) par rapport au plan image (X', Y') du réseau 4. L'angle (α) est défini dans le plan (Y", Z"), orthogonal au plan de détection (X", Y").

L'autre moyen d'inclinaison apte à éviter des spectres parasites peut également comprendre le réseau 4 qui est un réseau calculé de telle sorte que le spectre qu'il produit soit incliné d'un angle (β) par rapport au plan de détection (X", Y") du détecteur 5.

Ainsi, l'invention permet d'éviter la superposition de spectres parasites au spectre à mesurer sans perdre en résolution spectrale, de manière simple et à faible coût.

## Revendications

1. Spectrographe à fenêtre de détecteur inclinée comprenant :
- une source lumineuse (1) apte à émettre un faisceau lumineux,
- une fente d'entrée (3) apte à transmettre une partie du faisceau lumineux émis par la source lumineuse (1) et à générer un faisceau lumineux transmis,
- un réseau (4) apte à diffracter le faisceau lumineux transmis par la fente d'entrée (3) et à générer un faisceau lumineux diffracté et un spectre dans un plan image (X', Y'),
- un détecteur (5) apte à détecter le faisceau lumineux diffracté par le réseau (4), ledit détecteur (5) comprenant une fenêtre (6, 11) à travers laquelle est transmis le faisceau lumineux diffracté par le réseau (4), une partie du faisceau lumineux diffracté générant des réflexions sur la fenêtre (6, 11) ou entre celle-ci et la surface sensible du détecteur (5) contenue dans un plan de détection (X", Y"),
- au moins un moyen d'inclinaison apte à éviter des spectres parasites,
**caractérisé en ce que** :
- un des moyens d'inclinaison aptes à éviter des spectres parasites comprend la fenêtre de détecteur (6, 11) qui est une fenêtre de détecteur inclinée (11).

2. Spectrographe à fenêtre de détecteur inclinée selon la revendication 1 , **caractérisé en ce que** la fenêtre de détecteur inclinée (11) est inclinée d'un angle (γ) par rapport au plan de détection (X", Y'') du détecteur (5).

3. Spectrographe à fenêtre de détecteur inclinée selon la revendication 2, **caractérisé en ce que** l'angle (γ) est supérieur à 0° et inférieur à 45°.

4. Spectrographe à fenêtre de détecteur inclinée selon l'une quelconque des revendications 1 à 3, **caractérisé en ce qu'**il comprend au moins un autre moyen d'inclinaison apte à éviter des spectres parasites.

5. Spectrographe à fenêtre de détecteur inclinée selon la revendication 4, **caractérisé en ce que** l'autre moyen d'inclinaison apte à éviter des spectres parasites comprend un filtre sélecteur incliné et disposé entre le réseau (4) et le détecteur (5).

6. Spectrographe à fenêtre de détecteur inclinée selon la revendication 4 ou 5, **caractérisé en ce que** l'autre moyen d'inclinaison apte à éviter des spectres parasites comprend le détecteur (5) qui est un détecteur incliné d'un angle (α), ledit détecteur incliné d'un angle (α) étant incliné de façon à ce que le plan de détection (X", Y") dudit détecteur soit incliné d'un angle (α) par rapport au plan image (X', Y') du réseau (4), et ledit angle (α) étant défini dans le plan (Y", Z"), orthogonal au plan de détection (X", Y").

7. Spectrographe à fenêtre de détecteur inclinée selon l'une quelconque des revendications 4 à 6, **caractérisé en ce que** l'autre moyen d'inclinaison apte à éviter des spectres parasites comprend le réseau (4) qui est un réseau calculé de telle sorte que le spectre qu'il produit soit incliné d'un angle (β) par rapport au plan de détection (X", Y") du détecteur (5).
